# EUROPEAN PATENT APPLICATION

(11) **EP 4 783 001 A1**
(43) Date of publication of application: **29.07.2026**
(21) Application number: 24867422.8
(22) Date of filing: 18.09.2024
(51) Int. Cl.: G06F 9/50

(54) **PROCESSING ELEMENT SCHEDULING APPARATUS AND METHOD, CHIP, AND RELATED DEVICE**

(30) Priority: 21.09.2023 CN 202311227739
(71) Applicant: HUAWEI TECHNOLOGIES CO., LTD., Shenzhen 518129 (CN)
(72) Inventor: WU, Xiaowen, Shenzhen, Guangdong 518129 (CN); JIA, Zhao, Shenzhen, Guangdong 518129 (CN); LI, Yongqian, Shenzhen, Guangdong 518129 (CN); NING, Haiwen, Shenzhen, Guangdong 518129 (CN); GENG, Ye, Shenzhen, Guangdong 518129 (CN); CHENG, Senhao, Shenzhen, Guangdong 518129 (CN); ZHANG, Xuekui, Shenzhen, Guangdong 518129 (CN)
(74) Representative: Maiwald GmbH
(86) International application number: PCT/CN2024/119334
(87) International publication number: WO 2025/061014

(57) **Abstract**

Embodiments of this application provide a processing element scheduling apparatus and method, a chip, and a related device. The processing element scheduling apparatus includes a first arbiter and M processing elements connected to the first arbiter, where M is a positive integer greater than or equal to 2. Each processing element is configured to send a first request signal to the first arbiter, where the first request signal is used to request to switch the corresponding processing element from a first power state to a second power state, and a power in the first power state is lower than a power in the second power state. The first arbiter is configured to: receive the first request signal sent by each of one or more processing elements of the M processing elements, and perform arbitration to obtain a first response sequence of one or more first request signals; and control, based on the first response sequence, the one or more processing elements to switch from the first power state to the second power state. Implementing embodiments of this application can reduce a phenomenon that a function error occurs in a circuit due to voltage undershoot, and improve circuit performance.

## Description

This application claims priority to Chinese Patent Application No. 202311227739.1, filed with the China National Intellectual Property Administration on September 21, 2023, and entitled "PROCESSING ELEMENT SCHEDULING APPARATUS AND METHOD, CHIP, AND RELATED DEVICE", which is incorporated herein by reference in its entirety.

### TECHNICAL FIELD

This application relates to the field of chip technologies, and in particular, to a processing element scheduling apparatus and method, a chip, and a related device.

### BACKGROUND

With continuous progress of technologies, chips also develop gradually. In a current high-performance chip, for example, a general-purpose processor (central processing unit, CPU), a neural network accelerator (Neural Processing Unit, NPU), and a general-purpose graphics accelerator (General-purpose graphics processing unit, GPGPU), dozens of to hundreds of processing elements (Processing Elements, PEs) are generally integrated. In each processing element, there may be a module (High Power Unit, HPU) with a high power density, for example, a vector/matrix accelerator. When HPUs in some or even all PEs in the chip work simultaneously, they may affect each other, resulting in a signal integrity (Power Integrity, PI) problem. For example, when the HPUs in all the PEs in the chip quickly enter a second power state from a standby mode (namely, an idle state) simultaneously, an on-chip power supply network may not be able to provide sufficient currents for all the HPUs. As a result, a voltage undershoot (undershoot) phenomenon exists in a voltage output by the on-chip power supply network, and an output voltage is reduced. Consequently, due to the voltage undershoot phenomenon, a circuit function error occurs in a related functional module that needs to be powered by a stable voltage in an internal circuit of the chip, and finally a function error occurs on the chip. For example, when a transient output voltage is lower than a minimum voltage Vmin at which a complementary metal oxide semiconductor (Complementary Metal Oxide Semiconductor, CMOS) transistor can work normally, the CMOS transistor may be turned off or a function error occurs.

Therefore, how to reduce a phenomenon that a function error occurs in a circuit due to voltage undershoot is an urgent technical problem to be resolved.

### SUMMARY

Embodiments of this application provide a processing element scheduling apparatus and method, a chip, and a related device, to reduce a phenomenon that a function error occurs in a circuit due to voltage undershoot, and improve circuit performance.

According to a first aspect, an embodiment of this application provides a processing element scheduling apparatus, where the apparatus includes a first arbiter and M processing elements PEs connected to the first arbiter, where M is a positive integer greater than or equal to 2.

Each processing element is configured to send a first request signal to the first arbiter, where the first request signal is used to request to switch the corresponding processing element from a first power state to a second power state, and a power in the first power state is lower than a power in the second power state.

The first arbiter is configured to: receive the first request signal sent by each of one or more processing elements of the M processing elements, and perform arbitration to obtain a first response sequence of one or more first request signals; and control, based on the first response sequence, the one or more processing elements to switch from the first power state to the second power state.

To avoid a function error caused by voltage undershoot when a plurality of processing elements simultaneously enter a high power state from a low power state, an embodiment of this application provides a processing element scheduling apparatus, to prevent, from a perspective of hardware, the plurality of processing elements from simultaneously entering the high power state from the low power state, and reduce an undershoot amplitude of voltage undershoot. In this way, a minimum transient voltage of voltage undershoot is higher than a working voltage of a normal circuit, thereby ensuring signal integrity of a chip. The processing element scheduling apparatus may be used in the chip or a related circuit module. The processing element scheduling apparatus includes a first arbiter and M processing elements PEs connected to the first arbiter. When any one of a plurality of processing elements connected to the first arbiter is to enter a high power state from a low power state (that is, to enter a second power state with a high power from a first power state with a low power), each processing element needs to send a first request signal to the first arbiter to request to switch a power state. When receiving the first request signal sent by the processing element connected to the first arbiter, the first arbiter may arbitrate the received first request signals, to obtain a response sequence corresponding to the first request signals through arbitration, so that the first arbiter sequentially controls, based on the response sequence, corresponding processing elements to enter the high power state from the low power state. This avoids a situation that a function error occurs and signal integrity is affected due to voltage undershoot caused by all the plurality of processing elements connected to the first arbiter entering the high power state from the low power state simultaneously. For example, when a transient voltage is lower than a minimum voltage Vmin at which a MOS transistor can work normally, the MOS transistor is turned off, resulting in a chip function error. The arbiter is connected between the plurality of processing elements, and each processing element undergoes arbitration of the arbiter during power state switching, so that the arbiter can schedule some processing elements in the plurality of processing elements to switch the power state. In addition, in comparison with software algorithm scheduling in a device or an apparatus, this greatly reduces device or apparatus overheads, also reduces a probability that all processing elements simultaneously enter the high power state from the low power state due to a scheduling error, and ensures signal performance of the chip.

In a possible implementation, the first arbiter is specifically configured to send a first response signal to each of the one or more processing elements based on the first response sequence, where the first response signal is used to control the corresponding processing element to switch from the first power state to the second power state. In the first response sequence, a time interval between each time of sending the first response signal to the corresponding processing element and a previous time of sending the first response signal to the corresponding processing element is greater than or equal to a first preset time interval.

In this embodiment of this application, the first arbiter may control, based on the response signal, the processing element to switch the power state. For example, when receiving the first response signal sent by the first arbiter, the processing element may switch from the low power state to the high power state immediately or within preset time. When the first arbiter sends the first response signal to each of the one or more processing elements based on the first response sequence, a time interval between any two times of sending the first response signal is greater than or equal to the first preset time interval. For example, based on the first request signal, when the first arbiter continuously activates different processing elements, or continuously activates a same processing element for a plurality of times, a time interval between any two times of sending the first response signal needs to exceed the first preset time interval. The first preset time interval may be determined based on a quantity and performance of processing elements connected to the arbiter, for example, may be between 10 nanoseconds and 1 microsecond. This sending manner in which the time interval between any two times needs to exceed the first preset time interval can ensure that all the processing elements are not activated at a same moment, thereby avoiding a phenomenon that a function error occurs because a transient voltage is less than a minimum voltage at which a circuit or a functional module can work normally due to voltage undershoot.

In a possible implementation, the first arbiter sends the corresponding first response signal to each of the one or more processing elements in a serial sending manner and/or a parallel sending manner. When the first arbiter sends the corresponding first response signal to each of the one or more processing elements in the parallel sending manner, a parallelism degree of parallel sending is less than or equal to M.

In this embodiment of this application, the first arbiter may control one processing element to switch to the high power state at a time, or may control a plurality of processing elements to switch to the high power state at a time. When a current total power is low and controlling the plurality of processing elements to switch to the high power state simultaneously does not affect normal working of the circuit, a maximum quantity of processing elements that are switched to the high power state simultaneously may be equal to a total quantity of processing elements connected to the arbiter. In this case, the parallelism degree of parallel sending of the first arbiter is less than or equal to M. When a current total power is high, controlling the plurality of processing elements to switch to the high power state simultaneously may cause the circuit to fail to work normally due to voltage undershoot, a maximum quantity of processing elements that are switched to the high power state simultaneously needs to be less than a total quantity of processing elements connected to the arbiter. In this case, the parallelism degree of parallel sending of the first arbiter is less than M. The first arbiter may control the some processing elements to switch to the high power state simultaneously on a basis of controlling all the processing elements not to switch to the high power state simultaneously, to improve arbitration efficiency and ensure performance of the processing elements.

In a possible implementation, each processing element includes one or more high power units HPUs, and the first response signal indicates a part or all of the high power units in the corresponding processing element to switch from the first power state to the second power state.

In this embodiment of this application, each processing element may include a high power unit, for example, a vector/matrix accelerator. When the high power unit is in a working state, a power is high, and consequently, a power of the corresponding processing element increases. Therefore, after receiving the first response signal, the processing element controls the part or all of the high power units in the processing element to switch from the first power state to the second power state. This can ensure that the high power unit in the processing element does not autonomously switch to the high power state when the first response signal is not received.

In a possible implementation, each processing element further includes a prediction module. The prediction module is configured to: detect a power state of the one or more high power units in the corresponding processing element; and when detecting that the part or all of the high power units are to switch from the first power state to the second power state, send the first request signal to the first arbiter.

In this embodiment of this application, each processing element may further include a prediction module. The prediction module may be configured to detect a power state of the one or more high power units in the corresponding processing element in real time or periodically. In this way, when the part or all of the high power units are to be switched to the second power state, the first request signal is sent to the first arbiter in a timely manner, to request to switch the high power unit from the first power state to the second power state, thereby improving switching accuracy and efficiency of switching the power state of the processing element.

In a possible implementation, the processing element further includes a task sending queue, the task sending queue is used to send a task descriptor of a task, and the task descriptor indicates whether the task invokes the one or more high power units in the corresponding processing element. The prediction module is specifically configured to: when the task descriptor indicates that the current task invokes the part or all of the high power units in the corresponding processing element, determine that the part or all of the high power units are to switch from the first power state to the second power state.

In this embodiment of this application, each processing element may further include a task sending queue, and one of methods for predicting, by the prediction module, that the high power unit is to enter the high power state from the low power state is to perform determining based on the task descriptor of the current task in the task sending queue. The task descriptor may indicate whether the current task needs to invoke the high power unit in the processing element. When the task descriptor indicates that the high power unit in the processing element needs to be invoked, it indicates that the invoked high power unit is to enter the high power state. In this case, the prediction module needs to send the first request signal to the first arbiter, to control the high power unit to enter the high power state.

In a possible implementation, each processing element further includes an instruction sending queue, and the instruction sending queue is used to send an operation instruction. The prediction module is specifically configured to: when detecting that a quantity of operation instructions corresponding to the part or all of the high power units in the instruction sending queue exceeds a preset threshold quantity, determine that the part or all of the high power units are to switch from the first power state to the second power state.

In this embodiment of this application, one of methods for predicting, by the prediction module, that the processing element is to enter the high power state from the low power state is to detect a quantity of operation instructions in the instruction sending queue of the processing element. When a quantity of operation instructions corresponding to a high power unit in the instruction sending queue is large (for example, exceeds the preset threshold quantity), it indicates that the high power unit is to enter the high power state. In this case, the prediction module needs to send the first request signal to the first arbiter, to control the high power unit to enter the high power state.

In a possible implementation, the first arbiter is specifically configured to perform arbitration to obtain the first response sequence of the one or more first request signals according to a preset polling rule or a response priority of the one or more processing elements of the M processing elements.

In this embodiment of this application, the first arbiter may perform arbitration to obtain the first response sequence of the first request signals according to the preset polling rule or the response priority, to give a response and return the first response signals in sequence. For example, earlier time at which the first request signal is received indicates an earlier response sequence corresponding to a response to the first request signal. For another example, the first response signal of a same processing element is not continuously returned simultaneously. For another example, a higher response priority of the corresponding processing element indicates an earlier response sequence corresponding to a response to the first request signal. The response sequence of the plurality of processing elements is arbitrated according to the preset rule, so that arbitration accuracy of the first arbiter can be improved, and poor chip performance caused by an error can be avoided.

In a possible implementation, the first arbiter is disposed in the middle of a plurality of processing elements; or a sum of communication distances between the first arbiter and all processing elements is minimum.

In this embodiment of this application, the first arbiter is disposed in the middle of the plurality of processing elements or the sum of the communication distances between the first arbiter and the plurality of processing elements is minimum, so that a communication delay between the first arbiter and the processing elements can be greatly reduced, processing efficiency is improved, and processing performance is ensured.

In a possible implementation, the first arbiter includes M groups of communication interfaces, each group of communication interfaces corresponds to one processing element, and each group of communication interfaces includes a request interface and a response interface, where each request interface is configured to receive the first request signal sent by the corresponding processing element, and each response interface is configured to send the first response signal to the corresponding processing element.

In this embodiment of this application, the first arbiter may communicate with each processing element through a dedicated interface module. That is, the first arbiter includes a plurality of groups of communication interfaces, each group of communication interfaces corresponds to one processing element, and each group of communication interfaces includes a request interface for transmitting the first request signal and a response interface for transmitting the response signal. In this way, the first arbiter communicates with the processing element normally, and efficiency of communication between the first arbiter and the plurality of processing elements is greatly improved. This avoids a situation that the first arbiter cannot receive the first request signals in a timely manner when the plurality of processing elements send the first request signals to the first arbiter simultaneously.

In a possible implementation, each processing element corresponds to a standby state and a plurality of high power states, power values in all the high power states are different, the second power state is one of the plurality of high power states, and the first power state is the standby state or a high power state that is in the plurality of high power states and in which a power is less than that in the second power state. The first response signal includes target power level information, and the target power level information indicates the second power state that the processing element is in after switching. Each processing element is further configured to send current power level information to the first arbiter, where the current power level information indicates the first power state that the processing element is currently in.

In this embodiment of this application, the processing element has the plurality of high power states. Each time the processing element is switched to a higher power state, the processing element needs to send the first request signal to the first arbiter, and then the first arbiter determines a level of an adjusted high power state corresponding to the processing element. This avoids a situation that the processing element randomly enters different high power states, and consequently a voltage undershoot phenomenon occurs and an output voltage decreases. This adjustment manner in which the first arbiter controls the power state of the processing element can globally control an overall power of the plurality of processing elements, and helps ensure stability of an output voltage of a power supply network and performance of the chip.

In a possible implementation, each group of communication interfaces further includes a power level interface, where each power level interface is configured to receive the current power level information sent by the corresponding processing element, and each response interface is further configured to send the target power level information.

In this embodiment of this application, because the processing element has the plurality of high power states, to facilitate that each processing element may send a current power state of the processing element to the first arbiter, each group of communication interfaces may further include an interface configured to transmit the current power level information. In addition, to reduce control costs and improve control efficiency, each group of response interfaces may be further configured to send the target power level information. For example, the first response signal may carry the corresponding target power level information.

In a possible implementation, the first arbiter and the M processing elements constitute a first processing cluster, the apparatus further includes a second arbiter and a plurality of first processing clusters, and the second arbiter is connected to a first arbiter in each first processing cluster. Each first arbiter is specifically configured to send a second request signal to the second arbiter when the first request signal is received. The second arbiter is configured to: receive the second request signal sent by each of one or more first arbiters; perform arbitration to obtain a second response sequence of one or more second request signals; and control the one or more first arbiters based on the second response sequence.

In this embodiment of this application, a multi-level arbitration architecture may be further provided. To be specific, at a granularity of one processing element, the first arbiter performs arbitration for switching to the high power state; and at a granularity of one first processing cluster, the second arbiter performs arbitration for switching to the high power state. That is, at the same time, only a part of processing elements in a part of the first processing clusters enter the high power state. This greatly reduces a quantity of processing elements that enter the high power state simultaneously in a global state, and further ensures stability of the output voltage of the power supply network and performance of the chip.

In a possible implementation, the second arbiter is specifically configured to send a second response signal to the one or more first arbiters based on the second response sequence, where the second response signal indicates the corresponding first arbiter to control a corresponding processing element to switch from the first power state to the second power state.

In this embodiment of this application, the second response signal may be used to control a response of the first arbiter. For example, after the second arbiter sends the second response signal to the corresponding first arbiter, the first arbiter can sequentially control the corresponding processing elements to switch from the first power state to the second power state. This control manner based on the response signal can more conveniently control arbiters of various levels, reduce an error rate, and ensure running performance of the chip.

In a possible implementation, in the second response sequence, a time interval between each time of sending the second response signal to the corresponding second arbiter and a previous time of sending the second response signal to the corresponding second arbiter is greater than or equal to a second preset time interval.

In this embodiment of this application, similar to the first arbiter, to ensure that voltage undershoot does not cause a phenomenon that a chip function error occurs because a transient voltage is less than a voltage at which a circuit structure in the apparatus can work normally, a time interval at which the second arbiter responds to the first arbiter each time may be greater than or equal to the second preset time interval. The second preset time interval and the first preset time interval may be different or the same. Alternatively, a maximum quantity of processing elements that can be activated at a single time may be adjusted by configuring the second preset time interval and the first preset time interval, to adapt to more application scenarios.

According to a second aspect, an embodiment of this application provides a processing element scheduling method, applied to a processing element scheduling apparatus, where the processing element scheduling apparatus includes a first arbiter and M processing elements PEs connected to the first arbiter, and M is a positive integer greater than or equal to 2; and the method includes:
receiving a first request signal sent by each of one or more processing elements of the M processing elements, and performing arbitration to obtain a first response sequence of one or more first request signals, where the first request signal is used to request to switch the corresponding processing element from a first power state to a second power state, and a power in the first power state is lower than a power in the second power state; and
controlling, based on the first response sequence, the one or more processing elements to switch from the first power state to the second power state.

In a possible implementation, controlling, based on the first response sequence, the one or more processing elements to switch from the first power state to the second power state includes: sending a first response signal to each of the one or more processing elements based on the first response sequence, where the first response signal is used to control the corresponding processing element to switch from the first power state to the second power state; and in the first response sequence, a time interval between each time of sending the first response signal to the corresponding processing element and a previous time of sending the first response signal to the corresponding processing element is greater than or equal to a first preset time interval.

In a possible implementation, the first arbiter sends the corresponding first response signal to each of the one or more processing elements in a serial sending manner and/or a parallel sending manner. When the first arbiter sends the corresponding first response signal to each of the one or more processing elements in the parallel sending manner, a parallelism degree of parallel sending is less than or equal to M.

In a possible implementation, each processing element includes one or more high power units HPUs, and the first response signal indicates a part or all of the high power units in the corresponding processing element to switch from the first power state to the second power state.

In a possible implementation, each processing element further includes a prediction module; and the method further includes: detecting, by the prediction module, a power state of the one or more high power units in the corresponding processing element; and when detecting that the part or all of the high power units are to switch from the first power state to the second power state, sending the first request signal to the first arbiter.

In a possible implementation, each processing element further includes a task sending queue, the task sending queue is used to send a task descriptor of a current task, and the task descriptor indicates whether the current task invokes the one or more high power units in the corresponding processing element; and detecting, by the prediction module, the power state of the one or more high power units in the corresponding processing element includes: obtaining the task descriptor of the current task in the task sending queue; and when the task descriptor indicates that the current task invokes the part or all of the high power units in the corresponding processing element, determining that the part or all of the high power units are to switch from the first power state to the second power state.

In a possible implementation, each processing element further includes an instruction sending queue, and the instruction sending queue is used to send an operation instruction; and detecting, by the prediction module, the power state of the one or more high power units in the corresponding processing element includes: detecting a quantity of operation instructions corresponding to the part or all of the high power units in the instruction sending queue; and when detecting that the quantity of operation instructions corresponding to the part or all of the high power units in the instruction sending queue exceeds the preset threshold quantity, determining that the part or all of the high power units are to switch from the first power state to the second power state.

In a possible implementation, performing arbitration to obtain the first response sequence of the one or more first request signals includes: performing arbitration to obtain the first response sequence of the one or more first request signals according to a preset polling rule or a response priority of the one or more processing elements of the M processing elements.

In a possible implementation, the first arbiter is disposed in the middle of a plurality of processing elements; or a sum of communication distances between the first arbiter and all processing elements is minimum.

In a possible implementation, the first arbiter includes M groups of communication interfaces, each group of communication interfaces corresponds to one processing element, and each group of communication interfaces includes a request interface and a response interface, where each request interface is configured to receive the first request signal sent by the corresponding processing element, and each response interface is configured to send the first response signal to the corresponding processing element.

In a possible implementation, each processing element corresponds to a standby state and a plurality of high power states, power values in all the high power states are different, the second power state is one of the plurality of high power states, and the first power state is the standby state or a high power state that is in the plurality of high power states and in which a power is less than that in the second power state. The first response signal includes target power level information, and the target power level information indicates the second power state that the processing element is in after switching. The method further includes: receiving current power level information sent by each of the one or more processing elements in the M processing elements, where the current power level information indicates the first power state that the corresponding processing element is currently in.

In a possible implementation, each group of communication interfaces further includes a power level interface, where each power level interface is configured to receive the current power level information sent by the corresponding processing element, and each response interface is further configured to send the target power level information.

In a possible implementation, the first arbiter and the M processing elements constitute a first processing cluster, the apparatus further includes a second arbiter and a plurality of first processing clusters, and the second arbiter is connected to a first arbiter in each first processing cluster. The method further includes: receiving, by the second arbiter, a second request signal sent by each of one or more first arbiters when the first request signal is received; performing arbitration to obtain, by the second arbiter, a second response sequence of one or more second request signals; and controlling, based on the second response sequence, the one or more corresponding first arbiters.

In a possible implementation, controlling, based on the second response sequence, the one or more corresponding first arbiters includes: sending a second response signal to each of the one or more corresponding first arbiters based on the second response sequence, where the second response signal indicates the corresponding first arbiter to control a corresponding processing element to switch from the first power state to the second power state.

In a possible implementation, in the second response sequence, a time interval between each time of sending the second response signal to the corresponding second arbiter and a previous time of sending the second response signal to the corresponding second arbiter is greater than or equal to a second preset time interval.

According to a third aspect, an embodiment of this application provides a chip, including a circuit and the processing element scheduling apparatus that is used in the circuit and that is in the first aspect and the first aspect.

According to a fourth aspect, an embodiment of this application provides a server. The server includes a circuit board and the processing element scheduling apparatus in the first aspect and the first aspect, and the circuit board is electrically connected to the processing element scheduling apparatus.

According to a fifth aspect, an embodiment of this application provides an electronic device. The electronic device includes a circuit board and the processing element scheduling apparatus in the first aspect and the first aspect, and the circuit board is electrically connected to the processing element scheduling apparatus.

According to a sixth aspect, an embodiment of this application provides a computer-readable storage medium, configured to store computer software instructions used by the processing element scheduling apparatus provided in the first aspect. The computer software instructions include a program configured to perform the processing element scheduling method provided in the second aspect.

According to a seventh aspect, an embodiment of this application provides a computer program, and the computer program includes instructions. When the computer program is executed by a computer, the computer is enabled to execute a procedure executed by the processing element scheduling apparatus provided in the first aspect.

It should be understood that the processing element scheduling method provided in the second aspect, the chip provided in the third aspect, the server provided in the fourth aspect, the electronic device provided in the fifth aspect, the computer-readable storage medium provided in the sixth aspect, and the computer program provided in the seventh aspect in this application are consistent with the technical solutions of the first aspect in this application. For specific content and beneficial effects thereof, refer to the processing element scheduling apparatus provided in the first aspect. Details are not described herein again.

### BRIEF DESCRIPTION OF DRAWINGS

To describe technical solutions in embodiments of this application or in the background more clearly, the following briefly describes the accompanying drawings for describing embodiments of this application or the background.
FIG. 1 is a diagram of a structure of a high-performance chip according to an embodiment of this application;
FIG. 2 is a diagram of a structure of a processing element scheduling apparatus according to an embodiment of this application;
FIG. 3A is a diagram of a structure of another processing element scheduling apparatus according to an embodiment of this application;
FIG. 3B is a diagram of a structure of still another processing element scheduling apparatus according to an embodiment of this application;
FIG. 4A and FIG. 4B are diagrams of structures of a group of processing element scheduling apparatuses according to an embodiment of this application;
FIG. 5 is a diagram of a structure of still another processing element scheduling apparatus according to an embodiment of this application;
FIG. 6 is a diagram of a communication interface of a first arbiter according to an embodiment of this application;
FIG. 7 is a diagram of a structure of still another processing element scheduling apparatus according to an embodiment of this application; and
FIG. 8 is a schematic flowchart of a processing element scheduling method according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

"Embodiments" mentioned in this specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a compute device and an application that runs on the compute device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, a distributed system, and/or across a network like an internet interacting with another system by using the signal).

First, some terms in this application are described, to help a person skilled in the art have a better understanding.
(1) Scheduling: A timing or a sequence of switching processing elements from a low power state to a high power state is managed and controlled. In embodiments of this application, each processing element is independent of each other and has no dependency relationship. To be specific, each processing element may randomly switch from the low power state to the high power state. To ensure that all processing elements switch from the low power state to the high power state not simultaneously, the sequence of switching the processing elements to the high power state may be managed and controlled to implement global scheduling.
(2) Processing element (Processing Element, PE): may be understood as a logic core (logic core). One or more tasks or one or more threads can be run on one logic core. A network including a plurality of same processing elements PEs according to a specific interconnection rule may be referred to as a systolic array. In embodiments of this application, a manner of connection between the plurality of processing elements is not limited.
(3) Arbiter (Arbiter): When a plurality of functional modules occupy a same resource, the arbiter can be used to arbitrate which module occupies the resource or which module occupies the resource first. For example, a module requesting to occupy the resource needs to generate a request (request). After all requests are sent to the arbiter, the arbiter can perform arbitration. In addition, the arbiter may further return a grant (grant), and the module receiving the grant may occupy the resource.
(4) High power unit (High Power Unit, HPU): indicates a functional module with a high power density. To be specific, in a working state, the functional module consumes a large power or consumes a large quantity of resources. The high power unit may be a matrix accelerator, a vector accelerator, a multiplication accelerator, or the like.
(5) Task sending queue: indicates a container or a queue (queue) that stores tasks or task descriptors in a task delivery process. The task or the task descriptor can be relayed or sent from a source to a target, and can act as a container in the process. A main purpose is to provide routing and ensure transfer or delivery of the task or the task descriptor.
(6) Instruction sending queue: indicates a container or a queue that stores operation instructions in an operation instruction delivery process. An operation instruction in the queue can be sent to a corresponding target. If a recipient of the sent operation instruction is unavailable or is not temporarily ready to receive the operation instruction, the instruction sending queue still retains the operation instruction until the operation instruction can be successfully transferred.

Second, for ease of understanding embodiments of this application, the following specifically analyzes a technical problem that needs to be resolved in embodiments of this application and an applicable application scenario.

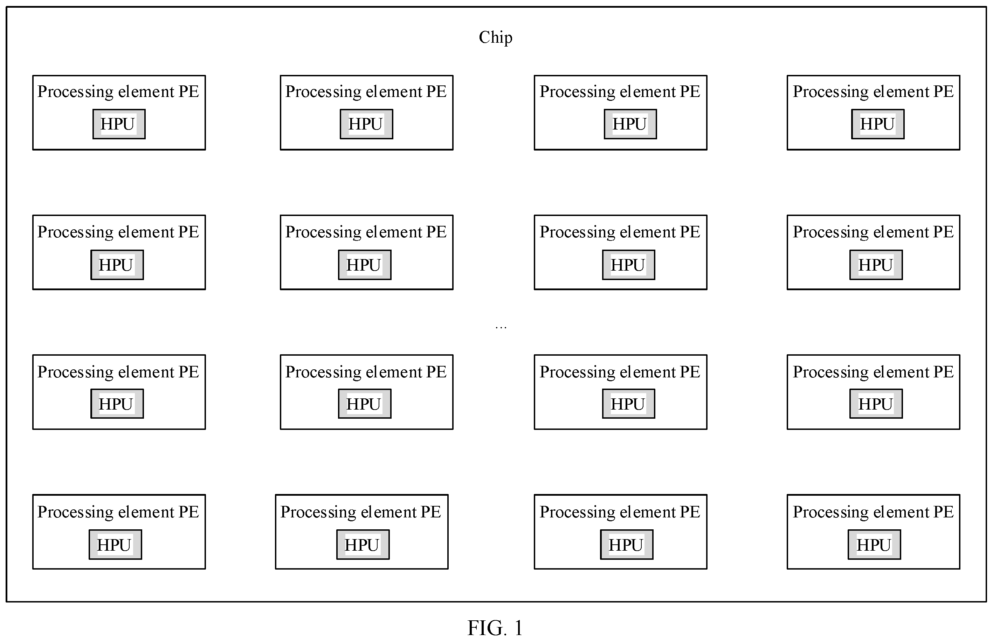

With continuous progress of technologies, chips also develop gradually. In a current high-performance chip, for example, a general-purpose processor (central processing unit, CPU), a neural network accelerator (Neural Processing Unit, NPU), and a general-purpose graphics accelerator (General-purpose graphics processing unit, GPGPU), dozens of to hundreds of processing elements (Processing Elements, PEs) are generally integrated. FIG. 1 is a diagram of a structure of a high-performance chip according to an embodiment of this application. In each processing element, there may be a module (High Power Unit, HPU) with a high power density, for example, a vector/matrix accelerator, which may be referred to as a high power unit. When HPUs in some or even all PEs in the chip start to work simultaneously, they may affect each other, resulting in a signal integrity (Power Integrity, PI) problem. For example, when HPUs in all or most PEs in the chip quickly enter a working state from a standby mode (namely, an idle state) simultaneously to start a high power mode, an on-chip power supply network may not be able to provide sufficient currents for all the PEs. As a result, a voltage undershoot (undershoot) phenomenon exists in a voltage output by the on-chip power supply network, and an output voltage is reduced. When an output transient voltage is lower than a normal working voltage required by an internal circuit of the chip due to voltage undershoot, a circuit function error occurs on a related functional module due to the voltage undershoot phenomenon, and finally a function error occurs on the chip. For example, when a complementary metal oxide semiconductor (Complementary Metal Oxide Semiconductor, CMOS) transistor can work normally at a minimum voltage Vmin, a function of the CMOS transistor is disabled or an error occurs, and finally a function error occurs on the chip. For another example, voltage undershoot may cause voltage instability, and an error may also occur in some functional modules that need a stable voltage.

In a conventional technology, to ensure that an output voltage of the on-chip power supply network is not less than a working voltage V for normal working in the chip at any time, one solution is to increase an input voltage V₀ of the on-chip power supply network. In this way, if a voltage undershoot phenomenon occurs when a plurality of HPUs are activated simultaneously, the output voltage V₁ of the on-chip power supply network is less than V₀ but is still not less than the working voltage V, thereby ensuring that the chip can work normally. However, because a power of the chip is directly proportional to a square of the voltage, increasing the input voltage V₀ of the on-chip power supply network causes a significant increase in the power of the chip.

Another solution is to use software to schedule HPUs in a PE to resolve the problem. To be specific, the software is used for scheduling to prevent HPUs in a plurality of PEs from simultaneously starting to work, and a voltage undershoot phenomenon does not occur provided that a quantity of PEs that are simultaneously started is small enough, so that the problem of voltage undershoot is expected to be resolved from a source. However, because software invoking is not precise enough, a possibility that the plurality of HPUs are started simultaneously cannot be completely avoided. In addition, overheads of software scheduling are generally large, which affects original performance of the chip. Furthermore, this solution further requires software designers or software users to understand a basic architecture of the software scheduling chip, which is difficult to achieve for most software designers or users.

In view of this, embodiments of this application provide a high power unit scheduling apparatus and a related method, to ensure, from a perspective of hardware, that time at which powers of HPUs in a plurality of PEs are increased is staggered, and avoid a situation that a transient voltage caused by voltage undershoot is less than a normal working voltage of a MOS transistor when the plurality of PEs simultaneously enter a high power state from a low power state, thereby achieving an objective of protecting PI of a chip. The high power unit scheduling apparatus includes a first arbiter and M processing elements PEs connected to the first arbiter, and M is a positive integer greater than or equal to 2. Each processing element is configured to send a first request signal to the first arbiter, where the first request signal is used to request to switch the corresponding processing element from a first power state to a second power state, and a power in the first power state is lower than a power in the second power state. The first arbiter is configured to: receive the first request signal sent by each of one or more processing elements of the M processing elements, and perform arbitration to obtain a first response sequence of one or more first request signals; and control, based on the first response sequence, the one or more processing elements to switch from the first power state to the second power state.

For a specific implementation of embodiments of this application, refer to related descriptions in the following embodiments. Details are not described in embodiments of this application.

Based on the technical problem proposed above, to facilitate understanding of embodiments of this application, the following first describes a processing element scheduling apparatus on which embodiments of this application are based.

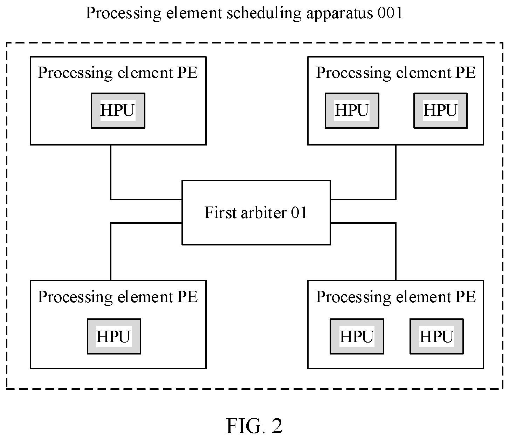

FIG. 2 is a diagram of a structure of a processing element scheduling apparatus according to an embodiment of this application.

As shown in FIG. 2, the processing element scheduling apparatus 001 may be used in various high-performance chips or processing apparatuses. The apparatus includes a first arbiter 01 and M processing elements PEs connected to the first arbiter, where M is a positive integer greater than or equal to 2.

Each processing element PE is configured to send a first request signal to the first arbiter 01, where the first request signal is used to request to switch the corresponding processing element PE from a first power state to a second power state, and a power in the first power state is lower than a power in the second power state. For example, the first request signal is used to request to switch the corresponding processing element PE from a low power state (namely, the first power state) to a high power state (namely, the second power state). It may be understood that the processing element scheduling apparatus shown in FIG. 2 is described by using an example in which one first arbiter 01 is connected to four processing elements PEs. When any processing element PE of the four processing elements PEs connected to the first arbiter 01 needs to enter the high power state from the low power state (that is, enter the second power state with a high power from the first power state with a low power), the processing element PE needs to send the first request signal to the first arbiter 01 to request to switch a power state, and the processing element PE connected to the first arbiter 01 cannot directly enter a higher power state without arbitration of the first arbiter 01.

The first arbiter 01 is configured to: receive the first request signal sent by each of one or more processing elements PEs of the M processing elements PEs, and perform arbitration to obtain a first response sequence of one or more first request signals; and control, based on the first response sequence, the one or more processing elements PEs to switch from the first power state to the second power state. For example, after any processing element PE or a plurality of processing elements PEs of the four processing elements PEs connected to the first arbiter 01 send a first request signal to the first arbiter 01, the first arbiter 01 may perform arbitration based on the one or more received first request signals, and obtain the first response sequence corresponding to the one or more first request signals through arbitration, to sequentially control, based on the first response sequence, processing elements that send first request signals to switch from the first power state to the second power state. The arbiter is connected between the plurality of processing elements, and each processing element undergoes arbitration of the arbiter during power state switching, so that the arbiter can schedule some processing elements in the plurality of processing elements to switch the power state. In addition, in comparison with software algorithm scheduling in a device or an apparatus, this greatly reduces device or apparatus overheads, also reduces a probability that all processing elements simultaneously enter the high power state from the low power state due to a scheduling error, and ensures signal performance of the chip.

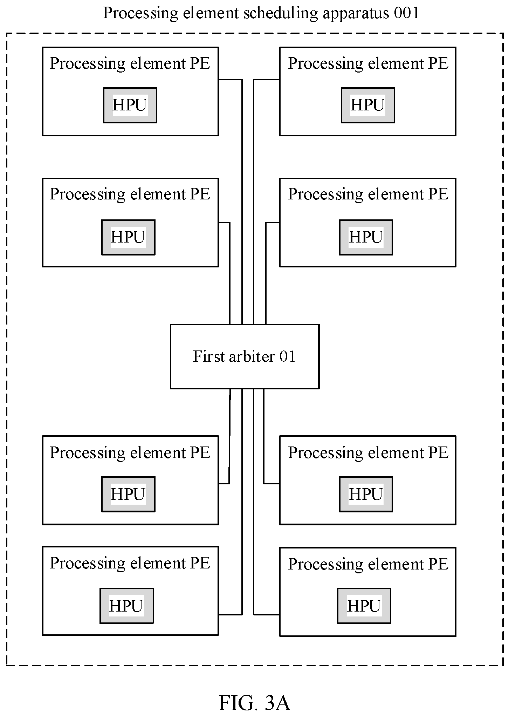

In addition, in embodiments of this application, an example in which one first arbiter 01 is connected to four processing elements PEs is used for description. This is not specifically limited in embodiments of this application. For example, with reference to FIG. 3A, FIG. 3A is a diagram of a structure of another processing element scheduling apparatus according to an embodiment of this application. As shown in FIG. 3A, one first arbiter 01 may be connected to eight processing elements PEs, and the eight processing elements PEs do not all switch from the low power state to the high power state simultaneously under control of the first arbiter 01.

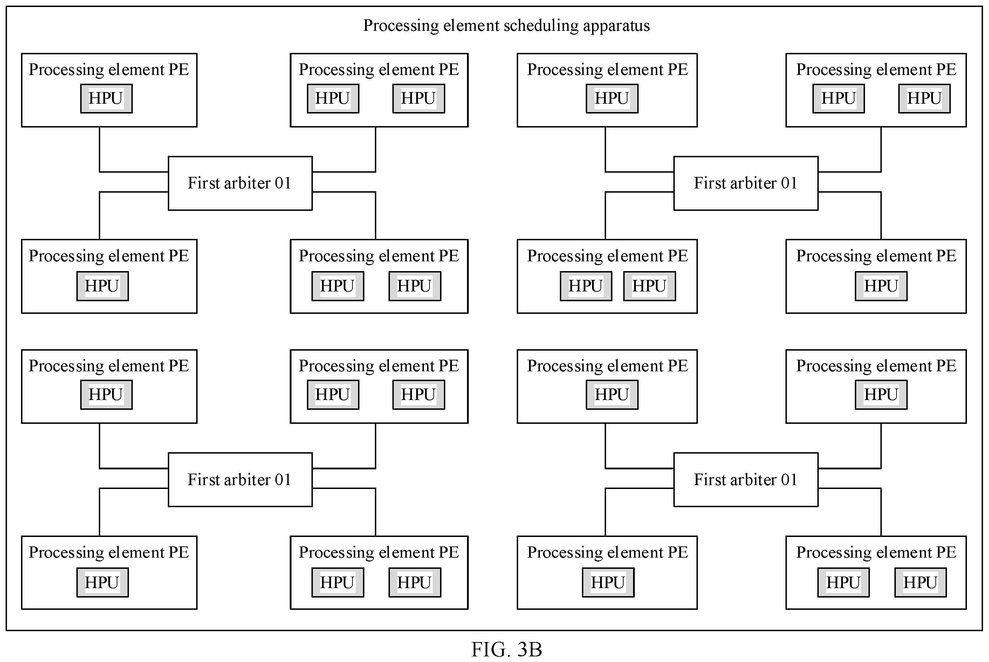

It should be noted that, with reference to FIG. 3B, FIG. 3B is a diagram of a structure of still another processing element scheduling apparatus according to an embodiment of this application. As shown in FIG. 3B, the processing element scheduling apparatus may include a plurality of first arbiters and M processing elements connected to each first arbiter. A quantity of processing elements connected to each first arbiter is the same. When all processing elements in the processing element scheduling apparatus are to switch from the low power state to the high power state, the plurality of first arbiters perform arbitration, so that only some processing elements can switch from the low power state to the high power state simultaneously in a global state, thereby increasing a minimum transient voltage during voltage undershoot and ensuring performance of a chip. For example, when one first arbiter is connected to four processing elements, and each first arbiter can control only one processing element to enter the high power state at a single time, in the global state, a maximum of one quarter of processing elements can switch from the low power state to the high power state simultaneously. In comparison with a situation that all processing elements switch from the low power state to the high power state simultaneously in the global state, a voltage undershoot phenomenon is significantly alleviated, and a probability that a chip function error occurs on the chip due to voltage undershoot is greatly reduced.

In some other embodiments, one processing element may continuously send a plurality of first request signals to the first arbiter. When sending time of sending the plurality of first request signals is within a preset time range, only one first request signal (which may be sent at the earliest time or may be sent at the latest time) of the plurality of first request signals is valid, and the other first request signals are invalid. For example, if three first request signals are sent within 10 nanoseconds, the first arbiter may respond to or arbitrate only one first request signal in the three first request signals. If sending time of every two first request signals is beyond the preset time range when the plurality of first request signals are sent, the plurality of first request signals are all valid. For example, if a processing element sends one first request signal every 100 nanoseconds, the sent first request signals are all valid until the processing element is switched to a highest power state.

In some embodiments, the first arbiter is specifically configured to send a first response signal to each of the one or more processing elements based on the first response sequence, where the first response signal is used to control the corresponding processing element to switch from the first power state to the second power state. In the first response sequence, a time interval between each time of sending the first response signal to the corresponding processing element and a previous time of sending the first response signal to the corresponding processing element is greater than or equal to a first preset time interval.

In response to the one or more first request signals, the first arbiter may send the first response signal to each of the one or more processing elements based on the first response sequence, and control, based on the response signal, the processing element to switch from the low power state to the high power state. For example, when receiving the first response signal sent by the first arbiter, the processing element may switch from the low power state to the high power state immediately or within preset time.

In addition, the first response sequence is a sequence in which the first arbiter sends the first response signal to the processing element. In the first response sequence, the time interval between each time of sending the first response signal to the corresponding processing element and the previous time of sending the first response signal to the corresponding processing element is greater than or equal to the first preset time interval. When the first arbiter receives a plurality of first request signals, the first arbiter performs arbitration to obtain a first response sequence corresponding to the plurality of first request signals. In the first response sequence, a time interval between any two times of sending the first response signal is greater than or equal to the first preset time interval. For example, when the first arbiter receives four first request signals, the first arbiter performs arbitration to obtain the following: A first response sequence corresponding to the plurality of first request signals is 1, 2, 3, and 4 in sequence. In this case, a time interval between a time point at which the first response signal is sent for a 1^{st} time and a time point at which the first response signal is sent for a 2^{nd} time is greater than or equal to the first preset time interval.

It should be noted that, based on the first request signal, when the first arbiter continuously activates different processing elements, or continuously activates a same processing element for a plurality of times, a time interval between any two times of sending the first response signal needs to exceed the first preset time interval. The first preset time interval may be determined based on a quantity of processing elements connected to the arbiter or a current global power state or performance of the processing element scheduling apparatus, that is, may be a time interval that can be adjusted based on a current status of the processing element scheduling apparatus. The first preset time interval may alternatively be a time interval configured by default, and a value of the first preset time interval may be 0 or may not be 0.

For example, when the first preset time interval is the time interval configured by default, the first preset time interval may not be 0, for example, may be between 10 nanoseconds and 1 microsecond. This sending manner in which the time interval between any two times needs to exceed at least 10 nanoseconds can ensure that all the processing elements are not activated at a same moment, thereby avoiding a phenomenon that a circuit cannot work normally and a circuit function error occurs because a transient voltage is less than a minimum voltage V at which the circuit can work normally due to voltage undershoot. For another example, when the processing element scheduling apparatus is in a current global low-power state or has stronger performance, the preset time interval may be 0. That is, the first response signals may be sent simultaneously, to control the corresponding processing elements to switch from the low power state to the high power state. In addition, the first preset time interval may be adjusted in real time based on current performance (for example, a transient voltage output by an on-chip power supply network), to prevent the transient voltage from being lower than the minimum voltage at which the circuit works normally.

It should be further noted that, in some embodiments, when only one first request signal is received, the first arbiter needs to determine whether time at which the processing element is controlled to switch to the high power state at a previous time is too close. If the time is too close, it may easily cause the plurality of processing elements to be switched to the high power state at close time points. In addition, it is intended to avoid a situation that processing performance of the chip deteriorates because the first arbiter cannot control the processing element to switch to the high power state in a timely manner. Therefore, when the first arbiter receives the first request signal sent by only one processing element, the first arbiter needs to determine whether a time interval between a previous time of sending the first response signal to the processing element and this time is greater than or equal to the first preset time interval when sending the first response signal to the processing element. If the time interval is greater than or equal to the first preset time interval, the first response signal can be sent. If the time interval is less than the first preset time interval, the first response signal cannot be immediately sent, and can be sent only after the time interval between the previous time of sending the first response signal to the processing element and this time is greater than or equal to the first preset time interval. That is, in a case in which only one first request signal is received or in the first response sequence, there needs to be a time interval between a time point at which the processing element is controlled, based on a first sequence, to switch to the high power state and a time point at which the processing element is controlled to switch to the high power state in the previous time. For example, the time interval may be between 10 nanoseconds and 1 microsecond.

In addition, in some other embodiments, when the current global power state is low or the first preset time interval is 0, in a case in which only one first request signal is received, the first arbiter may not need to determine time at which the processing element is controlled to switch to the high power state in the previous time, and may directly respond to the first request signal and return the corresponding first response signal.

In some embodiments, the first arbiter sends the corresponding first response signal to each of the one or more processing elements in a serial sending manner and/or a parallel sending manner. When the first arbiter sends the corresponding first response signal to each of the one or more processing elements in the parallel sending manner, a parallelism degree of parallel sending is less than or equal to M.

The first arbiter may send the corresponding first response signal to each of the one or more processing elements in the serial sending manner or the parallel sending manner each time based on the first response sequence. For example, the first arbiter may send the corresponding first response signal to each of the one or more processing elements only in the serial sending manner, or may send the corresponding first response signal to each of the one or more processing elements only in the parallel sending manner, or may send the corresponding first response signal to each of the one or more processing elements in a combination of the serial sending manner and the parallel sending manner. That is, the first arbiter may send one first response signal at a time to control one processing element to switch to the high power state; or may send a plurality of first response signals at a time to control a plurality of processing elements to switch to the high power state simultaneously.

When the plurality of processing elements are controlled at a time to switch to the high power state simultaneously, a quantity of processing elements that are switched to the high power state simultaneously may be less than a total quantity of processing elements connected to the first arbiter. That is, the parallelism degree of parallel sending of the first arbiter is less than or equal to N, and N is a positive integer greater than 1 and less than M. Alternatively, a quantity of processing elements that are switched to the high power state simultaneously may be equal to a total quantity M of processing elements connected to the first arbiter.

For example, four processing elements in total send first request signals to the first arbiter. After arbitrating the four first request signals, the first arbiter obtains a first response sequence corresponding to the four first request signals. A first response signal is sent to each of two processing elements for a 1^{st} time, and the first response signal is sent to each of the remaining two processing elements for a 2^{nd} time and a 3^{rd} time. A quantity 2 of processing elements in the 1^{st} time of sending is less than the total quantity of processing elements connected to the first arbiter. It may be understood that the first arbiter may control some processing elements to switch to the high power state simultaneously on a basis of controlling all processing elements to switch from the low power state to the high power state not simultaneously, to improve arbitration efficiency and ensure performance of the processing elements.

For example, when the first arbiter determines to control all the processing elements to switch to the high power state simultaneously at a time, in a case in which current on-chip power supply can meet a requirement of normal working of the circuit, for example, the first arbiter obtains information indicating that a current overall power is low, or obtains indication information indicating that all the processing elements can be controlled to switch to the high power state simultaneously, or is subject to higher-level regulation or scheduling, the first arbiter may activate power states of all the processing elements after receiving the first request signals. That is, when the plurality of processing elements are controlled to switch to the high power state simultaneously without affecting normal working of the circuit, a maximum quantity of processing elements that are switched to the high power state simultaneously may be equal to the total quantity of processing elements connected to the arbiter. In this case, the parallelism degree of parallel sending of the first arbiter may be less than or equal to M. When a current total power is high, controlling the plurality of processing elements to switch to the high power state simultaneously may cause the circuit to fail to work normally due to voltage undershoot, the maximum quantity of processing elements that are switched to the high power state simultaneously needs to be less than the total quantity of processing elements connected to the arbiter. In this case, the parallelism degree of parallel sending of the first arbiter is less than M. The first arbiter may control the some processing elements to switch to the high power state simultaneously on a basis of controlling all the processing elements not to switch to the high power state simultaneously, to improve arbitration efficiency and ensure performance of the processing elements.

In some embodiments, each processing element includes one or more high power units HPUs, and the first response signal indicates a part or all of the high power units in the corresponding processing element to switch from the first power state to the second power state.

As shown in FIG. 2 and FIG. 3A, each processing element may include one or more high power units, for example, a vector accelerator and a matrix accelerator. When the high power unit is in a working state, a power is high, and consequently, a power of the corresponding processing element also increases. Therefore, that the processing element sends the first request signal to the first arbiter may be understood as a request to switch the part or all of the high power units in the processing element from a standby state to a working state, that is, switch from the low power state to the high power state. After the processing element receives the first response signal, the part or all of the high power units are controlled to switch from the low power state to the high power state. This manner can ensure that the high power unit in the processing element does not autonomously switch to the high power state when the first response signal is not received.

In some embodiments, each processing element further includes a prediction module. The prediction module is configured to detect a power state of the one or more high power units in the corresponding processing element. Each processing element is specifically configured to: when the prediction module detects that the part or all of the high power units are to switch from the first power state to the second power state, send the first request signal to the first arbiter.

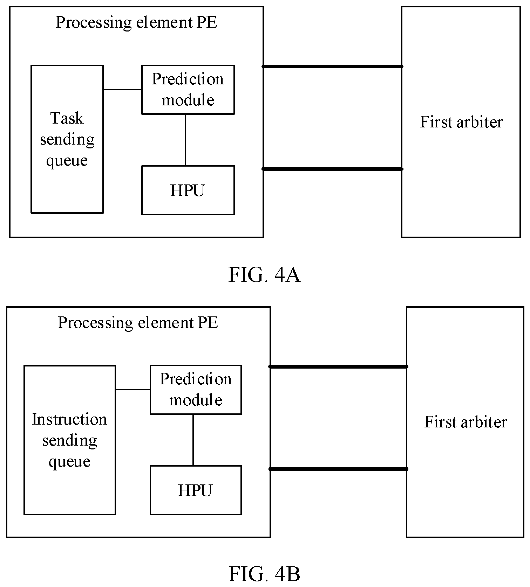

FIG. 4A and FIG. 4B are diagrams of structures of a group of processing element scheduling apparatuses according to an embodiment of this application. For ease of description, FIG. 4A and FIG. 4B do not show other processing elements connected to the first arbiter. In embodiments of this application, as shown in FIG. 4A and FIG. 4B, each processing element may further include a prediction module. The prediction module may be configured to detect a power state of each high power unit in the corresponding processing element in real time or periodically. In this way, when the part or all of the high power units are to be switched to the second power state, the first request signal is sent to the first arbiter in a timely manner, to request to switch the high power unit from the first power state to the second power state, thereby improving switching accuracy and efficiency of switching the power state of the processing element.

In some embodiments, the processing element further includes a task sending queue, the task sending queue is used to send a task descriptor of a task, and the task descriptor indicates whether the task invokes the one or more high power units in the corresponding processing element. The prediction module is specifically configured to: when the task descriptor indicates that the current task invokes the part or all of the high power units in the corresponding processing element, determine that the part or all of the high power units are to switch from the first power state to the second power state.

As shown in FIG. 4A, a method for predicting, by the prediction module, that the processing element is to enter the high power state from the low power state is to determine, based on the task descriptor of the current task in the task sending queue in the processing element, whether the processing element or the high power unit in the processing element is to enter the high power state from the low power state. The task descriptor may indicate whether the current task needs to invoke the high power unit in the processing element. When the task descriptor indicates that the high power unit in the processing element needs to be invoked, it indicates that the invoked high power unit is to enter the high power state. In this case, the prediction module needs to send the first request signal to the first arbiter, to control the high power unit to enter the high power state. For example, the processing element may include a matrix accelerator. When the prediction module may predict, based on a feature (namely, the task descriptor) of a currently allocated task in the task sending queue, whether the matrix accelerator is used, for example, when the task descriptor of the currently allocated task in the task sending queue indicates that the task needs to invoke the matrix accelerator, it may be determined that the matrix accelerator in the processing element is to enter the high power state from the low power state, to complete the corresponding task.

In some embodiments, each processing element further includes an instruction sending queue, and the instruction sending queue is used to send an operation instruction. The prediction module is specifically configured to: when detecting that a quantity of operation instructions corresponding to the part or all of the high power units in the instruction sending queue exceeds a preset threshold quantity, determine that the part or all of the high power units are to switch from the first power state to the second power state.

As shown in FIG. 4B, another method for predicting, by the prediction module, that the processing element is to enter the high power state from the low power state is to detect the quantity of operation instructions in the instruction sending queue of the processing element, to determine whether the processing element or the high power unit in the processing element is to enter the high power state from the low power state. When a quantity of operation instructions corresponding to a high power unit in the instruction sending queue is large (for example, exceeds the preset threshold quantity), it indicates that the processing element is to enter the high power state. In this case, the prediction module needs to send the first request signal to the first arbiter, so that the first arbiter can control the processing element to enter the high power state. For example, when the prediction module detects that there is a large quantity of instructions for invoking or for the matrix accelerator in the instruction sending queue of the processing element, it indicates that the matrix accelerator needs to enter the working state, that is, it indicates that the processing element is to enter the high power state from the low power state, to complete the corresponding task. The preset threshold quantity may be set by default, or may be dynamically adjusted based on a power of a current processing element or a total power of global processing elements. A specific value of the preset threshold quantity is not specifically limited in embodiments of this application.

It should be noted that the prediction module in each processing element may predict the power state of the processing element in a same manner or different manners. This is not specifically limited in embodiments of this application.

In some embodiments, the first arbiter is specifically configured to perform arbitration to obtain the first response sequence of the one or more first request signals according to a preset polling rule or a response priority of the one or more processing elements of the M processing elements.

The first arbiter may perform arbitration to obtain the first response sequence of the first request signals according to the preset polling rule or the response priority, to give a response and return the first response signals in sequence. For example, earlier time at which the first request signal is received indicates an earlier response sequence corresponding to a response to the first request signal. For another example, the first response signal of a same processing element is not continuously returned simultaneously. For another example, a higher response priority of the corresponding processing element indicates an earlier response sequence corresponding to a response to the first request signal. The response sequence of the plurality of processing elements is arbitrated according to the preset rule, so that arbitration accuracy of the first arbiter can be improved, and poor chip performance caused by an error can be avoided.

In some embodiments, the first arbiter is disposed in the middle of a plurality of processing elements; or a sum of communication distances between the first arbiter and all processing elements is minimum.

It should be noted that, that the first arbiter is disposed in the middle of the plurality of processing elements may indicate generally a middle position, or may be understood as in a center of a geometric pattern including the plurality of processing elements, rather than a middle position in a strict sense. In addition, a position in which the sum of the communication distances between the first arbiter and all the processing elements is minimum may be a position in which minimum time is required when the first arbiter communicates with all processing elements of the plurality of processing elements. As shown in FIG. 2 and FIG. 3A, the first arbiter may be disposed in a middle position of the plurality of processing elements or in a position in which the sum of the communication distances between the first arbiter and the plurality of processing elements is minimum. Such disposing in the middle can greatly reduce a communication delay between the first arbiter and the processing element, improve processing efficiency, and ensure processing performance.

In some embodiments, the first arbiter includes M groups of communication interfaces, each group of communication interfaces corresponds to one processing element, and each group of communication interfaces includes a request interface and a response interface, where each request interface is configured to receive the first request signal sent by the corresponding processing element, and each response interface is configured to send the first response signal to the corresponding processing element.

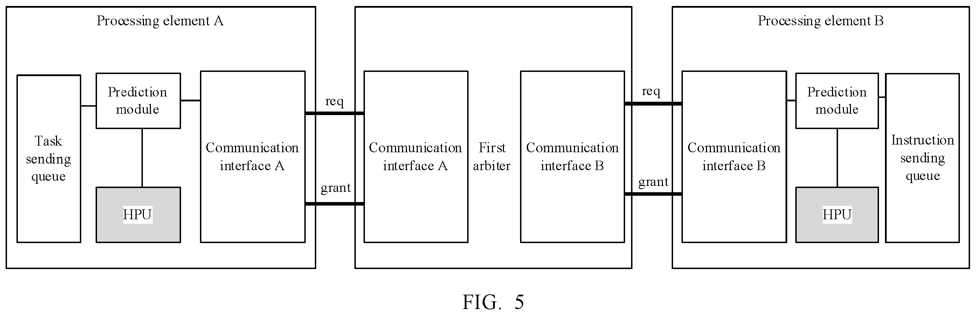

The first arbiter may communicate with each processing element through a dedicated interface module. FIG. 5 is a diagram of a structure of still another processing element scheduling apparatus according to an embodiment of this application. As shown in FIG. 5, the first arbiter includes a plurality of groups of communication interfaces, and each group of communication interfaces corresponds to one processing element. For example, a first request signal req and a first response signal grant are transmitted between a processing element A and the first arbiter through a communication interface A; and a first request signal req and a first response signal grant are transmitted between a processing element B and the first arbiter through a communication interface B. Each group of communication interfaces includes a request interface for transmitting the first request signal req and a response interface for transmitting the response signal grant. In this way, the first arbiter communicates with the processing element normally, and efficiency of communication between the first arbiter and the plurality of processing elements is greatly improved. This avoids a situation that the first arbiter cannot receive the first request signal in a timely manner when the plurality of processing elements send the first request signal to the first arbiter simultaneously.

In some other embodiments, each of the request interface and the response interface for transmitting signals includes an input module and an output module that are disposed in the corresponding processing element and the first arbiter respectively. For example, the request interface is disposed in the output module of the corresponding processing element, is connected to the input module disposed in the first arbiter, and is configured to transmit the first request signal req; and the response interface is disposed in the input module of the corresponding processing element, is connected to the output module disposed in the first arbiter, and is configured to transmit the first response signal grant.

In some other embodiments, the request interface and the response interface for transmitting the signals may also be equivalent to a request output pin and a response output pin that are disposed in the corresponding processing element and the first arbiter respectively. It may be understood that, when an electrical signal output by the request output pin changes from a low level to a high level, it may be considered that the corresponding processing element transmits the first request signal req to the first arbiter. When an electrical signal output by the response output pin changes from a low level to a high level, it may be considered that the first arbiter transmits the first response signal grant to the corresponding processing element. That is, a handshake signal is transmitted between the first arbiter and the corresponding processing element through each group of communication interfaces.

In some embodiments, each processing element corresponds to a standby state and a plurality of high power states, power values in all the high power states are different, the second power state is one of the plurality of high power states, and the first power state is the standby state or a high power state that is in the plurality of high power states and in which a power is less than that in the second power state. The first response signal includes target power level information, and the target power level information indicates the second power state that the processing element is in after switching. Each processing element is further configured to send current power level information to the first arbiter, where the current power level information indicates the first power state that the processing element is currently in.

The processing element may have the plurality of high power states. For example, if a highest power level of the processing element is 3 and a lowest power level of the processing element is 0, the processing element corresponds to three high power states of levels 1 to 3 and one standby state of a level 0, namely, four power states in total. Power values of the four power states are different. The second power state to which the processing element is switched each time is one of the plurality of high power states, and the original first power state is the standby state or a high power state that is in the plurality of high power states and in which a power is less than that in the second power state. In addition, each time the processing element is switched to a higher power state, the processing element needs to send the first request signal to the first arbiter, and then the first arbiter determines a level of an adjusted high power state corresponding to the processing element. This avoids a situation that the processing element randomly enters different high power states, and consequently a voltage undershoot phenomenon occurs and an output voltage decreases. It should be noted that power levels defined by each processing element and the first arbiter are consistent.

In some other embodiments, power levels defined by the one or more high power units included in the processing element may be consistent with the power levels defined by the processing element and the first arbiter. For example, the high power unit also corresponds to three high power states of levels 1 to 3 and one standby state of a level 0, namely, four power states in total. Each time the high power unit is switched to a higher power state, the corresponding processing element needs to send the first request signal to the first arbiter; and after receiving a response, the processing element controls the corresponding high power unit to switch to the higher power state.

In some other embodiments, power levels defined by the one or more high power units included in the processing element may alternatively be inconsistent with the power levels defined by the processing element and the first arbiter. For example, the high power unit has only two power states in total: a standby state and one high power state (namely, a working state). In this case, each high power state in the plurality of high power states of the processing element corresponds to a different quantity of high power units in the working state. For example, a processing element includes three high power units. When one high power unit is in the working state and the remaining two high power units are in the standby state, a power of the processing element may be one third of a maximum power, and a level corresponding to the processing element may be 1. When two high power units are in the working state and the remaining one high power unit is in the standby state, a power of the processing element may be two thirds of a maximum power, and a level corresponding to the processing element may be 2. When all the three high power units are in the working state, a power of the processing element may be a maximum power, and a level corresponding to the processing element may be 3. It may also be understood that a quantity of a plurality of high power units that are in the processing element and enter the high power state from the low power state is different, and a power in the high power state corresponding to the processing element is also different.

The first response signal includes the target power level information, and the target power level information indicates the second power state that the processing element is in after switching. Each processing element is further configured to send the current power level information to the first arbiter, where the current power level information indicates the first power state that the processing element is currently in.

If the processing element has a plurality of power levels, that is, has the plurality of high power states, when sending the first request signal to the first arbiter, each processing element is further configured to send the current power level information indicating the first power state that the processing element is currently in to the first arbiter, and may further receive the target power level information that is sent by the first arbiter and that indicates the second power state that the processing element is in after switching. For example, if the processing element is in a power state whose level is 2 and needs to be switched to a power state of a higher level, the processing element needs to send the first request signal and the current power level information (where a level is 2) indicating a current power state to the first arbiter; and then receives the first response signal that is returned by the first arbiter and that carries the target power level information (for example, a level is 4). The first response signal allows the processing element to switch to the power state of the higher level, and switch to the power state whose level is 4. This adjustment manner in which the first arbiter controls the power state of the processing element can globally control an overall power of the plurality of processing elements, and helps ensure stability of an output voltage of a power supply network and performance of the chip.

In some embodiments, each group of communication interfaces further includes a power level (Power_level) interface. Each power level interface is configured to receive the current power level (Current Power level) information sent by the corresponding processing element, and each response interface is further configured to send the target power level information (Grant Power_level).

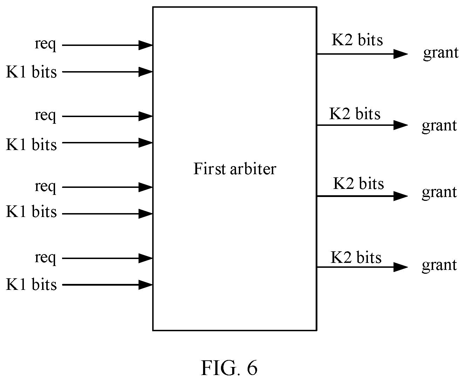

Because the processing element has the plurality of high power states, to facilitate that each processing element may send a current power state of the processing element to the first arbiter in a timely manner, each group of communication interfaces may further include an interface configured to transmit the current power level information. FIG. 6 is a diagram of a communication interface of a first arbiter according to an embodiment of this application. For ease of description, FIG. 6 does not show a processing element connected to the first arbiter. In embodiments of this application, as shown in FIG. 6, each group of communication interfaces in the first arbiter includes a request interface for transmitting a first request signal req, a power level interface for transmitting current power level information K1 bits, and a response interface for transmitting a first response signal grant that carries target power level information K2 bits. In addition, to reduce control costs and improve control efficiency, the response interface in each group of communication interfaces may be further configured to send the target power level information. For example, the first response signal may carry the corresponding target power level information.

In some other embodiments, another power level interface may be further disposed in each group of communication interfaces, and is configured to transmit the target power level information to the corresponding processing element. This is not specifically limited in embodiments of this application.

In some embodiments, the first arbiter and the M processing elements constitute a first processing cluster, the apparatus further includes a second arbiter and a plurality of first processing clusters, and the second arbiter is connected to a first arbiter in each first processing cluster. Each first arbiter is specifically configured to send a second request signal to the second arbiter when the first request signal is received. The second arbiter is configured to: receive the second request signal sent by each of one or more first arbiters; perform arbitration to obtain a second response sequence of one or more second request signals; and control the one or more first arbiters based on the second response sequence.

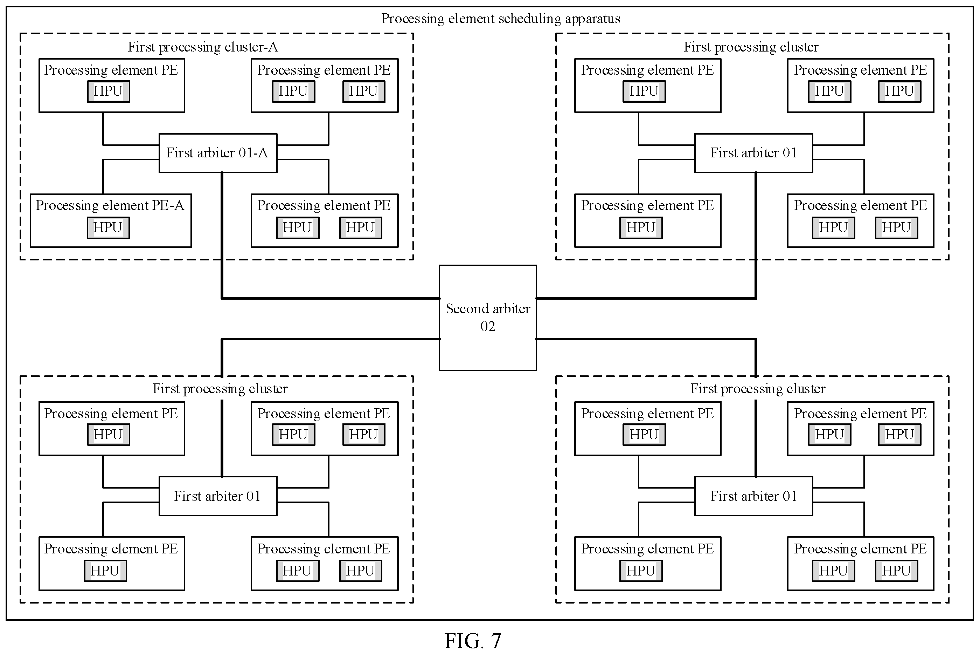

FIG. 7 is a diagram of a structure of still another processing element scheduling apparatus according to an embodiment of this application. In this embodiment of this application, a multi-level arbitration architecture may be further provided. As shown in FIG. 7, in this embodiment of this application, a two-level arbitration architecture of the processing element scheduling apparatus is provided. To be specific, a first-level arbitration architecture means that a first arbiter 01 performs arbitration for switching a plurality of processing elements PEs to the high power state at a granularity of one processing element PE, and a second-level arbitration architecture means that a second arbiter 02 performs arbitration for switching a plurality of processing elements PEs to the high power state at a granularity of one first processing cluster. For example, as shown in FIG. 7, when a processing element PE-A is to switch from the first power state to the second power state, the processing element PE-A sends a first request signal to a first arbiter 01-A; and after receiving the first request signal, the first arbiter 01-A sends a second request signal to the second arbiter 02. The second arbiter 02 arbitrates the received second request signal to obtain a second response sequence corresponding to the second request signal, and controls, based on the second response sequence, the first arbiter 01-A to respond to the first request signal sent by the processing element PE-A. Therefore, based on the multi-level arbitration structure, in the global state, only a part of processing elements in a part of first processing clusters can enter the high power state at the same time. This greatly reduces a quantity of processing elements that enter the high power state simultaneously, and further ensures stability of the output voltage of the power supply network and performance of the chip.

It should be noted that the multi-level arbitration structure of the processing element scheduling apparatus may be adaptively adjusted based on an application scenario. For example, the processing element scheduling apparatus may further include an arbitration structure of more levels, for example, a three-level arbitration structure or a four-level arbitration structure. This is not specifically limited in embodiments of this application.

In some embodiments, the second arbiter is specifically configured to send a second response signal to the one or more first arbiters based on the second response sequence, where the second response signal indicates the corresponding first arbiter to control a corresponding processing element to switch from the first power state to the second power state.

The second arbiter 02 controls, based on the second response signal, a response of the first arbiter, the second arbiter 02 arbitrates a received second request signal A sent by the first arbiter 01-A to obtain a second response sequence corresponding to the second request signal A, and sends the second response signal to the first arbiter 01-A based on the second response sequence. After receiving the second response signal, the first arbiter 01-A controls, based on the first response sequence obtained by the first arbiter 01-A through arbitration, the processing element PEA to switch from the first power state to the second power state. Only after the second arbiter sends the second response signal to the corresponding first arbiter, the first arbiter can sequentially control the corresponding processing elements to switch from the first power state to the second power state. That is, before receiving the second response signal, the first arbiter 01 does not control, based on the first response sequence, the corresponding processing element to switch to the high power state. This control manner based on the response signal can more conveniently control arbiters of various levels, reduce an error rate, and ensure running performance of the chip.

In some embodiments, in the second response sequence, a time interval between each time of sending the second response signal to the corresponding second arbiter and a previous time of sending the second response signal to the corresponding second arbiter is greater than or equal to a second preset time interval.

Similar to the first arbiter, to ensure that voltage undershoot does not cause a phenomenon that a chip function error occurs because a transient voltage is less than a minimum voltage V at which the circuit can work normally, a time interval at which the second arbiter responds to the first arbiter each time may be greater than or equal to the second preset time interval. The second preset time interval is not specifically limited in embodiments of this application. The second preset time interval may be 0 or may not be 0. In addition, the second preset time interval may be different from or the same as the first preset time interval.

Similar to the first arbiter, when the second arbiter determines that all processing elements in a plurality of first processing clusters can be switched to the high power state simultaneously and that current on-chip power supply can further meet a requirement of normal working of the circuit, the second preset time interval may be 0. For example, when the second arbiter obtains information indicating that a current overall power is low, or is subject to higher-level regulation or scheduling, or the like, the second arbiter may control first arbiters in all first processing clusters and indicate the first arbiters to activate connected processing elements after receiving the second request signal. The second arbiter may control processing elements in all the first processing cluster to switch to the high power state simultaneously, to improve arbitration efficiency and ensure performance of the processing element.

In addition, both the second preset time interval and the first preset time interval may be fixed time intervals respectively configured by default, or may be time intervals that can be dynamically adjusted. In some other embodiments, a maximum quantity of processing elements that can be activated at a single time may be adaptively adjusted by configuring the second preset time interval and the first preset time interval, to adapt to more application scenarios. For example, when the global power state is low, both the first preset time interval and the second preset time interval may be set to 0. In this case, power states of all processing elements may be switched at a same moment. When the global power state is low, the first preset time interval may be set to not 0, and the second preset time interval may be set to 0; or the first preset time interval is set to 0, and the second preset time interval is set to not 0. In this case, power states of a part of processing elements may be switched at a same moment. When the global power state is high, both the first preset time interval and the second preset time interval may be set to not 0. In this case, power states of a small part of processing elements may be switched at a same moment.

In some other embodiments, the second arbiter may be regulated by a higher-layer controller. That is, it may be understood that a working state of the second arbiter may also be controlled based on the current global power state. For example, when only a small part of current global processing elements (namely, all processing elements in all the first processing clusters) are to be switched to the high power state, and other processing elements are all in the low power state, the second arbiter may be in the standby state. In this case, the first arbiter of the first processing cluster may not need to send the second request signal to the second arbiter, and may directly perform arbitration and respond to the first request signal. Alternatively, the second arbiter may be in a normal working state. In this case, the second preset time interval may be directly set to 0, to respond to the first arbiter more quickly, thereby improving performance. When a large part of current global processing elements are to be switched to the high power state, the second arbiter may be in a normal working state. In this case, the second preset time interval may be set to not 0, to reduce and mitigate a voltage undershoot phenomenon, and maintain a normal function of the circuit.

In conclusion, to avoid a function error caused by voltage undershoot when a plurality of processing elements simultaneously enter a high power state from a low power state, an embodiment of this application provides a processing element scheduling apparatus, to prevent, from a perspective of hardware, the plurality of processing elements from simultaneously entering the high power state from the low power state, and reduce an undershoot amplitude of voltage undershoot. In this way, a minimum transient voltage of voltage undershoot is higher than a working voltage of a normal circuit, thereby ensuring signal integrity of a chip. The processing element scheduling apparatus may be used in the chip or a related circuit module. The processing element scheduling apparatus includes a first arbiter and M processing elements PEs connected to the first arbiter. When any one of a plurality of processing elements connected to the first arbiter is to enter a high power state from a low power state (that is, to enter a second power state with a high power from a first power state with a low power), each processing element needs to send a first request signal to the first arbiter to request to switch a power state. When receiving the first request signal sent by the processing element connected to the first arbiter, the first arbiter may arbitrate the received first request signals, to obtain a response sequence corresponding to the first request signals through arbitration, so that the first arbiter sequentially controls, based on the response sequence, corresponding processing elements to enter the high power state from the low power state. This avoids a situation that a function error occurs and signal integrity is affected due to voltage undershoot caused by all the plurality of processing elements connected to the first arbiter entering the high power state from the low power state simultaneously. For example, when a transient voltage is lower than a minimum voltage Vmin at which a MOS transistor can work normally, the MOS transistor is turned off, resulting in a chip function error. The arbiter is connected between the plurality of processing elements, and each processing element undergoes arbitration of the arbiter during power state switching, so that the arbiter can schedule some processing elements in the plurality of processing elements to switch the power state. In addition, in comparison with software algorithm scheduling in a device or an apparatus, this greatly reduces device or apparatus overheads, also reduces a probability that all processing elements simultaneously enter the high power state from the low power state due to a scheduling error, and ensures signal performance of the chip.

Based on the structure of the processing element scheduling apparatus provided in FIG. 2, the following analyzes and resolves the technical problem proposed in this application in detail with reference to the processing element scheduling method provided in embodiments of this application.

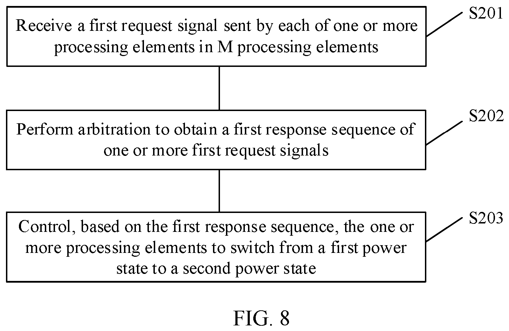

FIG. 8 is a schematic flowchart of a processing element scheduling method according to an embodiment of this application. The method is applied to the processing element scheduling apparatus shown in FIG. 2 to FIG. 7. The processing element scheduling apparatus includes a first arbiter and M processing elements PEs connected to the first arbiter, where M is a positive integer greater than or equal to 2. The method includes the following steps.

Step S201: Receive a first request signal sent by each of one or more processing elements in the M processing elements.

Specifically, the first arbiter receives the first request signal sent by each of the one or more processing elements of the M processing elements connected to the first arbiter, where the first request signal is used to request to switch the corresponding processing element from a first power state to a second power state, and a power in the first power state is lower than a power in the second power state.

Optionally, each processing element further includes a prediction module; and the method further includes: The prediction module detects a power state of one or more high power units in the corresponding processing element; and when the prediction module detects that a part or all of the high power units are to switch from the first power state to the second power state, the corresponding processing element sends the first request signal to the first arbiter.

Optionally, each processing element further includes a task sending queue, the task sending queue is used to send a task descriptor of a current task, and the task descriptor indicates whether the current task invokes the one or more high power units in the corresponding processing element; and that the prediction module detects the power state of the one or more high power units in the corresponding processing element includes: obtaining the task descriptor of the current task in the task sending queue; and when the task descriptor indicates that the current task invokes the part or all of the high power units in the corresponding processing element, determining that the part or all of the high power units are to switch from the first power state to the second power state.

Optionally, each processing element further includes an instruction sending queue, and the instruction sending queue is used to send an operation instruction; and that the prediction module detects the power state of the one or more high power units in the corresponding processing element includes: detecting a quantity of operation instructions corresponding to the part or all of the high power units in the instruction sending queue; and when detecting that the quantity of operation instructions corresponding to the part or all of the high power units in the instruction sending queue exceeds a preset threshold quantity, determining that the part or all of the high power units are to switch from the first power state to the second power state.

Optionally, the first arbiter is disposed in the middle of a plurality of processing elements; or a sum of communication distances between the first arbiter and all processing elements is minimum.

Step S202: Perform arbitration to obtain a first response sequence of one or more first request signals.

Specifically, the first arbiter arbitrates the one or more received first request signals, and obtains the first response sequence of the one or more first request signals through arbitration.

Optionally, performing arbitration to obtain the first response sequence of the one or more first request signals includes: performing arbitration to obtain the first response sequence of the one or more first request signals according to a preset polling rule or a response priority of the one or more processing elements of the M processing elements.

Step S203: Control, based on the first response sequence, the one or more processing elements to switch from the first power state to the second power state.

Specifically, the first arbiter controls, based on the first response sequence, the one or more processing elements to switch from the first power state to the second power state.

Optionally, controlling, based on the first response sequence, the one or more processing elements to switch from the first power state to the second power state includes: sending a first response signal to each of the one or more processing elements based on the first response sequence, where the first response signal is used to control the corresponding processing element to switch from the first power state to the second power state; and in the first response sequence, a time interval between each time of sending the first response signal to the corresponding processing element and a previous time of sending the first response signal to the corresponding processing element is greater than or equal to a first preset time interval.

Optionally, the first arbiter sends the corresponding first response signal to each of the one or more processing elements in a serial sending manner and/or a parallel sending manner. When the first arbiter sends the corresponding first response signal to each of the one or more processing elements in the parallel sending manner, a parallelism degree of parallel sending is less than or equal to M.

Optionally, each processing element includes one or more high power units HPUs, and the first response signal indicates a part or all of the high power units in the corresponding processing element to switch from the first power state to the second power state.

Optionally, the first arbiter includes M groups of communication interfaces, each group of communication interfaces corresponds to one processing element, and each group of communication interfaces includes a request interface and a response interface, where each request interface is configured to receive the first request signal sent by the corresponding processing element, and each response interface is configured to send the first response signal to the corresponding processing element.

Optionally, each processing element corresponds to a standby state and a plurality of high power states, power values in all the high power states are different, the second power state is one of the plurality of high power states, and the first power state is the standby state or a high power state that is in the plurality of high power states and in which a power is less than that in the second power state. The first response signal includes target power level information, and the target power level information indicates the second power state that the processing element is in after switching. The method further includes: receiving current power level information sent by each of the one or more processing elements in the M processing elements, where the current power level information indicates the first power state that the corresponding processing element is currently in.

Optionally, each group of communication interfaces further includes a power level interface, where each power level interface is configured to receive the current power level information sent by the corresponding processing element, and each response interface is further configured to send the target power level information.

Optionally, the first arbiter and the M processing elements constitute a first processing cluster, the apparatus further includes a second arbiter and a plurality of first processing clusters, and the second arbiter is connected to a first arbiter in each first processing cluster. The method further includes: receiving, by the second arbiter, a second request signal sent by each of one or more first arbiters when the first request signal is received; performing arbitration to obtain, by the second arbiter, a second response sequence of one or more second request signals; and controlling, based on the second response sequence, the one or more corresponding first arbiters.

Optionally, controlling, based on the second response sequence, the one or more corresponding first arbiters includes: sending a second response signal to each of the one or more corresponding first arbiters based on the second response sequence, where the second response signal indicates the corresponding first arbiter to control a corresponding processing element to switch from the first power state to the second power state.

Optionally, in the second response sequence, a time interval between each time of sending the second response signal to the corresponding second arbiter and a previous time of sending the second response signal to the corresponding second arbiter is greater than or equal to a second preset time interval.

It should be noted that, for related descriptions of step S201 to step S203 in the method embodiment described in embodiments of this application, refer to the related descriptions of functions of functional units of the processing element scheduling apparatus in the apparatus embodiment shown in FIG. 2 to FIG. 7. Details are not described herein again in embodiments of this application.

In addition, an embodiment of this application further provides a chip. The chip includes a circuit and the processing element scheduling apparatus that is used in the circuit and that is in any one of the foregoing embodiments. The chip may further include a power supply network, which may be configured to supply power to the processing element scheduling apparatus.

An embodiment of this application further provides an electronic device. The electronic device includes a circuit board and the processing element scheduling apparatus in any one of the foregoing embodiments, and the circuit board is electrically connected to the processing element scheduling apparatus.

An embodiment of this application further provides a server. The server includes a circuit board and the processing element scheduling apparatus in any one of the foregoing embodiments, and the circuit board is electrically connected to the processing element scheduling apparatus. Optionally, the server further includes an on-chip power supply system to supply power to the processing element scheduling apparatus.

An embodiment of this application further provides a computer-readable storage medium. The computer-readable storage medium stores computer program code. When a processor executes the computer program code, a computer is enabled to perform the method in any one of the foregoing embodiments.

An embodiment of this application further provides a computer program product. When the computer program product runs on a computer, the computer is enabled to perform the method in any of the foregoing embodiments.

It should be noted that, for brief description, the foregoing method embodiments are represented as a series of actions. However, a person skilled in the art should appreciate that this application is not limited to the described order of the actions because according to this application, some steps may be performed in other orders or simultaneously. It should be further appreciated by a person skilled in the art that embodiments described in this specification all belong to preferred embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing element, or each of the units may exist alone physically, or two or more units are integrated into one unit. The integrated unit may be implemented in a form of hardware, or may be implemented in a form of a software functional unit.

When the foregoing integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like, and may be specifically a processor in the computer device) to perform all or some of the steps of the method described in embodiments of this application. The foregoing storage medium includes any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A processing element scheduling apparatus, wherein the apparatus comprises a first arbiter and M processing elements PEs connected to the first arbiter, wherein M is a positive integer greater than or equal to 2;
each processing element is configured to send a first request signal to the first arbiter, wherein the first request signal is used to request to switch the corresponding processing element from a first power state to a second power state, and a power in the first power state is lower than a power in the second power state; and
the first arbiter is configured to: receive the first request signal sent by each of one or more processing elements of the M processing elements, and perform arbitration to obtain a first response sequence of one or more first request signals; and control, based on the first response sequence, the one or more processing elements to switch from the first power state to the second power state.

2. The apparatus according to claim 1, wherein the first arbiter is specifically configured to send a first response signal to each of the one or more processing elements based on the first response sequence, wherein the first response signal is used to control the corresponding processing element to switch from the first power state to the second power state; and
in the first response sequence, a time interval between each time of sending the first response signal to the corresponding processing element and a previous time of sending the first response signal to the corresponding processing element is greater than or equal to a first preset time interval.

3. The apparatus according to claim 2, wherein the first arbiter sends the corresponding first response signal to each of the one or more processing elements in a serial sending manner and/or a parallel sending manner, wherein
when the first arbiter sends the corresponding first response signal to each of the one or more processing elements in the parallel sending manner, a parallelism degree of parallel sending is less than or equal to M.

4. The apparatus according to claim 2 or 3, wherein each processing element comprises one or more high power units HPUs, and the first response signal indicates a part or all of the high power units in the corresponding processing element to switch from the first power state to the second power state.

5. The apparatus according to claim 4, wherein each processing element further comprises a prediction module, wherein
the prediction module is configured to: detect a power state of the one or more high power units in the corresponding processing element; and when detecting that the part or all of the high power units are to switch from the first power state to the second power state, send the first request signal to the first arbiter.

6. The apparatus according to claim 5, wherein each processing element further comprises a task sending queue, the task sending queue is used to send a task descriptor of a current task, and the task descriptor indicates whether the current task invokes the one or more high power units in the corresponding processing element; and
the prediction module is specifically configured to: when the task descriptor indicates that the current task invokes the part or all of the high power units in the corresponding processing element, determine that the part or all of the high power units are to switch from the first power state to the second power state.

7. The apparatus according to claim 5, wherein each processing element further comprises an instruction sending queue, and the instruction sending queue is used to send an operation instruction; and
the prediction module is specifically configured to: when detecting that a quantity of operation instructions corresponding to the part or all of the high power units in the instruction sending queue exceeds a preset threshold quantity, determine that the part or all of the high power units are to switch from the first power state to the second power state.

8. The apparatus according to any one of claims 1 to 7, wherein the first arbiter is disposed in the middle of the plurality of processing elements; or a sum of communication distances between the first arbiter and all processing elements is minimum.

9. The apparatus according to any one of claims 1 to 8, wherein the first arbiter comprises M groups of communication interfaces, each group of communication interfaces corresponds to one processing element, and each group of communication interfaces comprises a request interface and a response interface, wherein each request interface is configured to receive the first request signal sent by the corresponding processing element, and each response interface is configured to send the first response signal to the corresponding processing element.

10. The apparatus according to claim 9, wherein each processing element corresponds to a standby state and a plurality of high power states, power values in all the high power states are different, the second power state is one of the plurality of high power states, and the first power state is the standby state or a high power state that is in the plurality of high power states and in which a power is lower than that in the second power state, wherein
the first response signal comprises target power level information, and the target power level information indicates the second power state that the processing element is in after switching; and
each processing element is further configured to send current power level information to the first arbiter, wherein the current power level information indicates the first power state that the processing element is currently in.

11. The apparatus according to claim 10, wherein each group of communication interfaces further comprises a power level interface, wherein each power level interface is configured to receive the current power level information sent by the corresponding processing element, and each response interface is further configured to send the target power level information.

12. The apparatus according to any one of claims 1 to 11, wherein the first arbiter and the M processing elements constitute a first processing cluster, the apparatus further comprises a second arbiter and a plurality of first processing clusters, and the second arbiter is connected to a first arbiter in each first processing cluster;
each first arbiter is specifically configured to send a second request signal to the second arbiter when the first request signal is received; and
the second arbiter is configured to: receive the second request signal sent by each of one or more first arbiters; perform arbitration to obtain a second response sequence of one or more second request signals; and control the one or more first arbiters based on the second response sequence.

13. The apparatus according to claim 12, wherein the second arbiter is specifically configured to send a second response signal to the one or more first arbiters based on the second response sequence, wherein the second response signal indicates the corresponding first arbiter to control a corresponding processing element to switch from the first power state to the second power state.

14. The apparatus according to claim 12, wherein in the second response sequence, a time interval between each time of sending the second response signal to the corresponding second arbiter and a previous time of sending the second response signal to the corresponding second arbiter is greater than or equal to a second preset time interval.

15. A processing element scheduling method, applied to a processing element scheduling apparatus, wherein the processing element scheduling apparatus comprises a first arbiter and M processing elements PEs connected to the first arbiter, and M is a positive integer greater than or equal to 2; and the method comprises:
receiving a first request signal sent by each of one or more processing elements of the M processing elements, and performing arbitration to obtain a first response sequence of one or more first request signals, wherein the first request signal is used to request to switch the corresponding processing element from a first power state to a second power state, and a power in the first power state is lower than a power in the second power state; and
controlling, based on the first response sequence, the one or more processing elements to switch from the first power state to the second power state.

16. A chip, comprising a circuit and the processing element scheduling apparatus that is used in the circuit and that is according to any one of claims 1 to 14.

17. A server, wherein the server comprises a circuit board and the apparatus according to any one of claims 1 to 14, and the circuit board is electrically connected to the apparatus.

18. An electronic device, wherein the electronic device comprises a circuit board and the apparatus according to any one of claims 1 to 14, and the circuit board is electrically connected to the apparatus.
